# EUROPÄISCHE PATENTSCHRIFT

(11) **EP 1 399 998 B1**
(45) Veröffentlichungstag und Bekanntmachung des Hinweises auf die Patenterteilung: **21.09.2005**
(21) Anmeldenummer: 02778864.5
(22) Anmeldetag: 11.06.2002
(51) Int. Cl.: H02H 1/00

(54) **SCHALTUNGSANORDNUNG FÜR EINEN FEHLERSTROMSCHUTZSCHALTER**
CIRCUIT ARRANGEMENT FOR A RESIDUAL-CURRENT CIRCUIT BREAKER
AGENCEMENT DE CIRCUIT POUR DISJONCTEUR DE COURANT DE FUITE

(30) Priorität: 12.06.2001 AT 9092001
(43) Veröffentlichungstag der Anmeldung: 24.03.2004
(73) Patentinhaber: Moeller Gebäudeautomation KG, 3943 Schrems (AT)
(72) Erfinder: KOCH, Michael, A-1190 Wien (AT); RITZINGER, Georg, A-3424 Wolfpassing (AT)
(74) Vertreter: Gibler, Ferdinand
(86) Internationale Anmeldenummer: PCT/AT2002/000173
(87) Internationale Veröffentlichungsnummer: WO 2002/101901

(56) Entgegenhaltungen:
- DE-A- 3 614 552
- GB-A- 2 244 396

## Beschreibung

Die Erfindung betrifft eine Schaltungsanordnung für einen Fehlerstromschutzschalter umfassend eine Erfassungsvorrichtung für einen Fehlerstrom in einem Versorgungsnetz, welcher vorzugsweise eine Aufbereitungsschaltung für den Fehlerstrom nachgeschalten ist, eine Energie-Speicherschaltung, welche in Abhängigkeit des erfaßten Fehlerstromes aufgeladen wird, einen Schwellenwertschalter, welcher den Ladungszustands der Energie-Speicherschaltung überwacht, und ein Schaltelement für die Generierung eines Auslöse-Spannungsimpulses für ein Auslöseelement für einen Trennschalter mindestens eines vom Versorgungsnetz gespeisten Verbrauchers, wobei der Schwellenwertschalter bei Erreichen eines vorgegebenen Ladungszustands (Soll-Ladezustand) der Energie-Speicherschaltung das Schaltelement zur Generierung eines Auslöse-Spannungsimpulses für das Auslöseelement veranlaßt.
Fehlerstromschutzschalter bzw. Fehlerstromüberwachungsschalter der genannten Art sind beispielsweise aus der DE 41 12 169 A1 und der DE 44 29 007 bekannt. Üblicherweise ist bei diesen Schaltungsanordnungen der erste Schwellenwertschalter durch eine Z-Diode und das Schaltelement durch einen elektronischen Schalter, beispielsweise einen Thyristor gebildet.
Durch die zunehmende Belastung von elektrischen Versorgungsnetzen mit unterschiedlichen Störeinflüssen, beispielsweise durch Ableitströme von Lampenvorschaltgeräten, von Schaltnetzteilen, auch von Frequenzumrichtern für Motorantriebe oder Gewittereinwirkung entsteht beim Einsatz von Fehlerstromschutzschaltern das Problem, daß oft schon kleine Störeinflüsse zum ungewollten Auslösen des Fehlerstromschutzschalters führen können.
Insbesondere bei als Thyristoren ausgebildeten Schaltelementen kommt es in diesem Zusammenhang oft zum ungewollten Auslösen des Fehlerstromschutzschalters durch Überkopfzünden des Schaltelementes. Auch ist es möglich, daß sich die Energie-Speicherschaltung nach dem ungewollten verfrühten Zünden des Schaltelementes über das Auslöseelement entlädt, ohne daß dieses die Trennung vom Netz vollzieht. Dies kann zum Nichtauslösen des Fehlerstromschutzschalters führen. Diese Problematik ist in den oben genannten Dokumenten nicht angesprochen.

GB-A-2,244,396 offenbart eine Schaltungsanordnung gemäß Oberbegriff des Anspruchs

Es ist Aufgabe der vorliegenden Erfindung, eine Schaltungsanordnung für Fehlerstromschutzschalter der eingangs genannten Art vorzustellen, das die beschriebenen Nachteile beseitigt und es erlaubt, ein Fehlauslösen bzw. ein Nichtauslösen des Fehlerstromschutzschalters bestmöglich zu unterdrücken bzw. allgemein eine Erhöhung der Störfestigkeit zu erreichen.

Erfindungsgemäß wird dies durch die Merkmale des Anspruchs 1 erreicht, wobei ein zweiter Schwellenwertschalter vorgesehen ist, der bis zum Erreichen eines weiteren vorgegebenen Ladungszustandes (Mindest-Ladezustand) der Energie-Speicherschaltung das Schaltelement sperrt.

Störeinflüsse unterhalb der durch den weiteren vorgegebenen Ladungszustand gegebenen Schwelle können somit nicht mehr zum Auslösen des Schaltelementes führen. Auf diese Weise kann das Fehlzünden des Fehlerstromschutzschalters sicher verhindert werden.

Um das Nichtauslösen des Fehlerstromschutzschalters zu verhindern, kann in weiterer Ausführung der Erfindung vorgesehen sein, daß der weitere vorgegebenen Ladungszustand (Mindest-Ladezustand) der Energie-Speicherschaltung über dem für das Funktionieren des Auslöseelements notwendigen Ladungszustand liegt.

Gemäß einer weiteren Variante der Erfindung kann vorgesehen sein, daß der zweite Schwellenwertschalter durch einem selbstleitenden N-Kanal Depletion Typ Junction Feldeffekttransistor (J4) gebildet ist. Damit erhält man eine besonders einfache und funktionszuverlässige Schaltungsanordnung.

Gemäß einer weiteren Variante der Erfindung kann vorgesehen sein, daß der Feldeffekttransistor (J4) zusammen mit den anderen Halbleiterbauelementen auf einem Chip integriert ist. Dies ermöglicht die Integration zu besonders kleinen und platzsparenden Schaltungen.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig. 1 ein Blockschaltbild eines bekannten Fehlerstromschutzschalters;
Fig. 2 ein vereinfachtes Blockschaltbild eines erfindungsgemäßen Fehlerstromschutzschalters mit zweitem Schwellenwertschalter 40';
Fig. 3 die Schaltungsanordnung einer Ausführungsform eines erfindungsgemäßen Fehlerstromschutzschalters und
Fig. 4 eine vereinfachte weitere Schaltungsanordnung einer Ausführungsform eines erfindungsgemäßen Fehlerstromschutzschalters.

Fehlerstromschutzschalter, kurz FI-Schalter genannt, umfassen Schutz-, Überwachungs- und Meldeschalter. Im allgemeinen überwachen FI-Schalter elektrische Installationen und schalten die Verbindung zum Netz ab, bevor ein aus dem Netz austretender und zur Erde fließender Fehlerstrom für den Menschen gefährlich werden kann. Dazu sind FI-Schalter so ausgelegt, daß Fehlerströme oberhalb einer bestimmten Größe zum Abschalten, bzw. Auftrennen des Versorgungsnetzes führen. Der Nennfehlerstrom I_{Δn} , d.h. der maximal tolerierbare Fehlerstrom beträgt für gewöhnlich etwa 30mA, wobei der FI-Schalter erst nach einer Toleranzzeit von etwa 10ms abschaltet. Diese Werte ergeben sich aus den für den Menschen gefährlichen Stromstärken und Frequenzen, welche beispielsweise zu Herzflattern führen können.

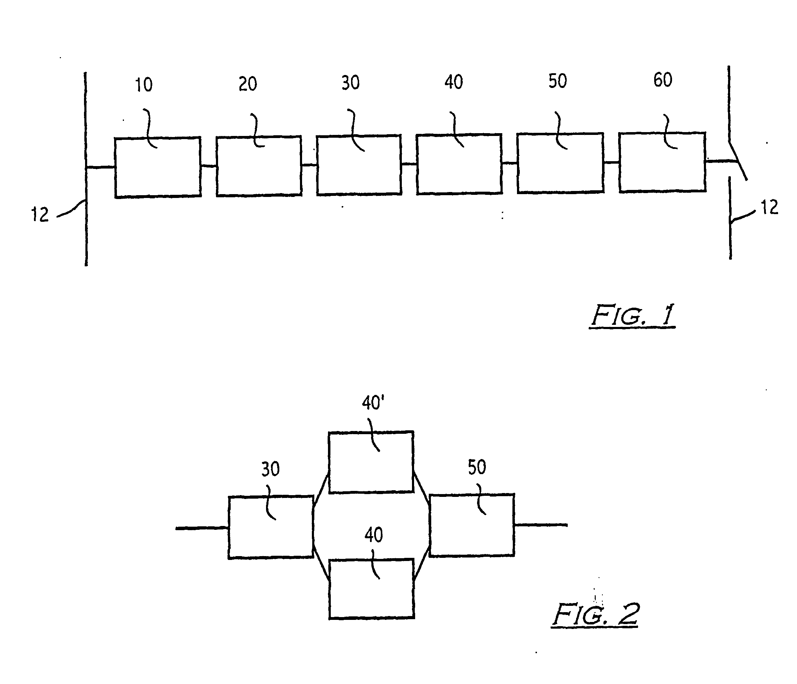

Fig. 1 zeigt den modularen Aufbau eines bekannten FI-Schalters in Form eines Blockschaltbildes.

In einer fehlerfreien Installation, d.h. ohne zur Erde abgeleiteten Fehlerstrom, fließt der Betriebsstrom vom Netz zum Verbraucher und von dort wieder zurück zum Netz. Wird infolge eines Defektes ein Fehlerstrom zur Erde abgeleitet, ist der zum Verbraucher hinfließende Strom um diesen Anteil größer als der zurückfließende Strom. Dieser Fehlerstrom kann, wenn er über einen Menschen zur Erde fließt, für diesen gefährlich sein bzw. zu schweren Verletzungen führen. Der Differenzstrom zwischen hinfließendem und zurückfließendem Strom, welcher dem abgeleiteten Fehlerstrom entspricht, wird durch die Erfassungsvorrichtung 10 erkannt.
Diese besteht aus einem Summenstromwandler, der einen Magnetkern, beispielsweise einen Ringkern umfaßt. Die einzelnen Leiter, die die Primärwicklungen des Summenstromwandlers bilden, können in einer oder mehreren Windungen um den Ring des Summenstromwandlers geführt sein oder, bei entsprechender Stärke der zu erwartenden Stromflüsse, einfach durch den Ring des Summenstromwandlers verlaufen. Der Differenzstrom in den die Primärwicklungen bildenden Leitern erzeugt in der ebenfalls um den Ringkern gewickelten Sekundärwicklung des Summenstromwandlers ein magnetisches Feld, welches an der Sekundärwicklung eine Spannung induziert.
Die Erfassungsvorrichtung 10 bzw. der Summenstromwandler erfaßt somit den auftretenden Differenzstrom bzw. Fehlerstrom und wandelt diesen in eine weiter zu verarbeitende Spannung um.

Die am Ausgang der Erfassungsvorrichtung 10 anliegende Spannung wird im allgemeinen einer Aufbereitungsschaltung 20 zugeführt. Dies ist vorteilhaft, um unterschiedliche Arten von Fehlerstrom, beispielsweise pulsierende Gleichfehlerströme und Wechselfehlerströme und Fehlerströme mit Gleichstromkomponenten durch den FI-Schalter sicher erkennen zu können. Die Aufbereitungsschaltung 20 ist deshalb im Einzelfall unterschiedlich ausgelegt und an die spezielle Verwendung des FI-Schalters angepaßt.
Vorzugsweise handelt es sich bei der Aufbereitungsschaltung 20 um eine einfache Gleichrichterschaltung, die den Wechselfehlerstrom gleichrichtet.

Der durch die an der Erfassungsvorrichtung 10 bzw. Aufbereitungsschaltung 20 anliegende Spamungsdifferenz erzeugte Strom wird an eine Energie-Speicherschaltung 30 weitergeleitet. Beim Auftreten eines Fehlerstromes wird die Energie-Speicherschaltung 30 aufgeladen. Der Ladungszustand ist dabei von der Stärke und von der Dauer des Fehlerstromes abhängig.

Insbesondere bei verzögerten FI-Schalter werden derartige Energie-Speicherschaltungen 30 verwendet.
Vorzugsweise führen einzelne Fehlerströme, deren Dauer jedoch unterhalb der Toleranzzeit liegt, nicht zum kumulierten langsamen Aufladen der Energie-Speicherschaltung 30. Dadurch ist garantiert, daß nur ein Fehlerstrom größer als der Nennfehlerstrom und länger als die Toleranzzeit zum Aufladen der Energie-Speicherschaltung 30 und in weiterer Folge zum Auslösen des FI-Schalters führt.
Die Energie-Speicherschaltung 30 kann beispielsweise durch einen Kondensator bzw. durch ein R-C Glied gebildet werden, das sich selbständig entlädt.

Der Ladungszustand der Energie-Speicherschaltung 30 wird durch einen Schwellenwertschalter 40 überwacht. Dieser Schwellenwertschalter 40 gibt bei Erreichen eines bestimmten, im folgenden mit Soll-Ladezustand bezeichneten Ladungszustandes der Energie-Speicherschaltung 30 einen Steuer-Impuls an das nachgeordnete Schaltelement 50 weiter, was in weiterer Folge zum Abschalten des FI-Schalters führt.
Für diese sogenannte Normalauslösung des FI-Schalters ist für die an der Energie-Speicherschaltung 30 anliegende Spannung ein Soll-Ladezustand vorgegeben, welcher auf den Nennfehlerstrom I_{Δn} und auf die Toleranzzeit abgestimmt ist.
Der Schwellenwertschalter 40 ist vorzugsweise durch eine Zehnerdiode gebildet, welche eine sehr genau definierte Durchbruchspannung aufweist.

Der vom Schwellenwertschalter 40 abgegebene Steuer-Impuls dient zur Steuerung des Schaltelementes 50.
Dieses fungiert als Lastschalter und erzeugt einen Auslöse-Spannungsimpuls für das Auslöseelement 60. Im Fall eines netzspannungsunabhängigen FI-Schalters nutzt das Schaltelement 50 beispielsweise die in der Energie-Speicherschaltung 30 gespeicherte Energie zur Generierung des Auslöse-Spannungsimpuls.
Das Schaltelement 50 wird im allgemeinen durch einen elektronischen Schalter gebildet. Dieser elektronische Schalter ist vorzugsweise ein selbstverstärkendes Schaltelement, zum Beispiel ein Thyristor. Neben Thyristoren können aber auch andere Bauteile wie Transistoren oder elektronische Relais zur Anwendung kommen.
Thyristoren zünden bei einer typischen Zündspannung selbständig. Für die Normalauslösung des FI Schalters wird aber nicht die Selbstzündung des Thyristors verwendet, sondern das vom ersten Schwellenwertschalter 40 ausgehende Steuersignal, welches zum Durchzünden des Schaltelementes 50 führt.

Der vom Schaltelement 50 generierte Auslöse-Spannungsimpuls wird an ein Auslöseelement 60 geleitet, das den Verbraucher vom Netz trennt.
Das Auslöseelement 60 kann als Permanentmagnetauslöser (PMA) ausgebildet sein. Dabei wird über eine Spule ein Anker bewegt, welcher über ein Schaltschloß und einen Kontaktapparat die Trennung des Verbrauchers vom Versorgungsnetz 12 vollzieht.

Im Fall der Normalauslösung ergibt sich somit folgendes Bild. Ein Fehlerstrom, welcher mindestens die Stärke des Nennfehlerstroms aufweist und über eine größere Dauer als die Toleranzzeit fließt, bewirkt das Aufladen der Energie-Speicherschaltung 30 bis zum Soll-Ladezustand. Bei Erreichen des Soll-Ladezustands beaufschlagt der Schwellenwertschalter 40 das Schaltelement 50 mit einem Steuer-Impuls, welcher dieses zum Zünden bzw. zum Durchschalten bringt. Der dadurch generierte Auslöse-Spannungsimpuls wird an das Auslöseelement 60 weitergeleitet, welches den Verbraucher vom Netz trennt.
Die erfindungsgemäße Schaltungsanordnung kann sowohl für netzspannungsunabhängige als auch für netzspannungsabhängige FI-Schalter verwendet werden. Bei netzspannungsunabhängigen FI-Schalter muß die in der Energie-Speicherschaltung 30 gespeicherte Energie jedoch ausreichen, um ein sicheres Trennen vom Netz durch das Auslöseelement 60 zu ermöglichen. Energiespeicher 30 und Schwellenwertschalter 40 sind somit sowohl auf den Nennfehlerstrom als auch auf das Auslöseelement 60 abzustimmen.

Die in Fig. 1 skizzierte Anordnung weist den Nachteil auf, daß gewisse unvermeidliche Spannungsspitzen unterhalb der Zündspannung aus dem Versorgungsnetz zwar nicht zum Laden der Energiespeicherung 30 auf den Soll-Ladezustand, jedoch zum Zünden des Schaltelementes 50 bzw. des Thyristors (sogenanntes Überkopfzünden) führen können. Die Störungen können durch das Netz, durch den eigenen, d.h. den durch eine Normalauslösung induzierten Fehlerstrom oder von der anderen Seite, vom Auslöseelement 60 bzw. vom PMA kommen.
Das nicht gewollte Zünden des Schaltelementes 50 führt im allgemeinen zur Trennung des Verbrauchers vom Netz durch das Auslöseelement 60. Dieses Fehlauslösen des FI-Schalters ist nicht gewollt.
Es ist auch möglich, daß das Schaltelement 50 einen Auslöse-Spannungsimpuls generiert, dieser aber nicht ausreicht, um die Trennung vom Netz durch das Auslöseelement 60 zu vollziehen. Dies ist insbesondere bei netzspannungsunabhängigen FI-Schaltern möglich. Der FI-Schalter löst somit nicht aus. Gleichzeitig wird aber ein weiteres Aufladen der Energie-Speicherschaltung 30 verhindert, weil durch das Öffnen des Schaltelementes 50 ein ständiger Stromfluß aus der Energie-Speicherschaltung 30 über das Auslöseelement 60 erfolgt. Es ist somit möglich, daß der FI-Schalter in weiterer Folge auch bei einem Fehlerstrom über dem Nennfehlerstrom nicht auslöst. Dieses Nichtauslösen kann zu Gefährdung von Menschen führen.

Der Kern der Erfindung liegt darin, Maßnahmen vorzusehen, die verhindern, daß Störeinflüsse unterhalb einer vorgegebenen Schwelle zur Auslösung des Schaltelementes 50 führen können. Dies wird durch das Vorsehen eines zweiten Schwellenwertschalter 40' erreicht.
Fig. 2 zeigt den modularen Aufbau eines bekannten FI-Schalters in Form eines Blockschaltbildes, welches den Unterschied zu bekannten FI-Schaltem verdeutlicht.
Erfindungsgemäß ist bei der in Fig. 2 gezeigten Ausführungsform dem Schaltelementes 50 ein zweiter Schwellenwertschalter 40' vorgeschaltet. Der zweite Schwellenwertschalter 40' blockiert bzw. sperrt das Schaltelement 50 und gibt dieses erst nach Erreichen eines bestimmten, im folgenden mit Mindest-Ladezustand bezeichneten Ladungszustandes der Energie-Speicherschaltung 30 frei.
Dafür muß das Schaltelement 50 einen zweiten Steuereingang aufweisen, über den das Schaltelement 50 so angesteuert werden kann, daß ein Durchschalten verhindert wird. Dies kann beispielsweise der zweiter Steuereingang einer Thyristortetrode sein.
Mit der erfindungsgemäßen Schaltungsanordnung ist es möglich, die Schwelle bzw. den Mindest-Ladezustand so zu legen, daß die Mehrzahl vorkommender Fehlauslösungen unterdrückt wird. Damit wird eine verbesserte Störfestigkeit erreicht. Um eine maximale Störfestigkeit zu erreichen, kann der Mindest-Ladezustand je nach Anwendung des FI-Schalters dimensioniert werden.
Der Mindest-Ladezustand darf dabei natürlich nicht größer als der Soll-Ladezustand gewählt werden, da ansonsten die Normalauslösung verhindert werden würde.
Als Schwelle bzw. Mindest-Ladezustand kann beispielsweise die Hälfte des einem Fehlerstrom in der Höhe des Nennfehlerstroms entsprechenden Soll-Ladezustandes gewählt werden. Mit dieser Vorgabe können mehr als die Hälfte typischer Fehler oder Störeinflüsse auf den FI-Schalter in Versorgungsnetzen unterdrückt werden.
Vorzugsweise ist der Mindest-Ladezustand so zu wählen, daß bei Anliegen ebendieses Mindest-Ladezustandes am Ausgang der Energie-Speicherschaltung 30 die in der Energie-Speicherschaltung 30 gespeicherte Energie ausreicht, um dem Auslöseelement 60 die Trennung vom Netz zu ermöglichen. Dadurch kann der oben beschriebene Fall des Nichtauslösens sicher vermieden werden.

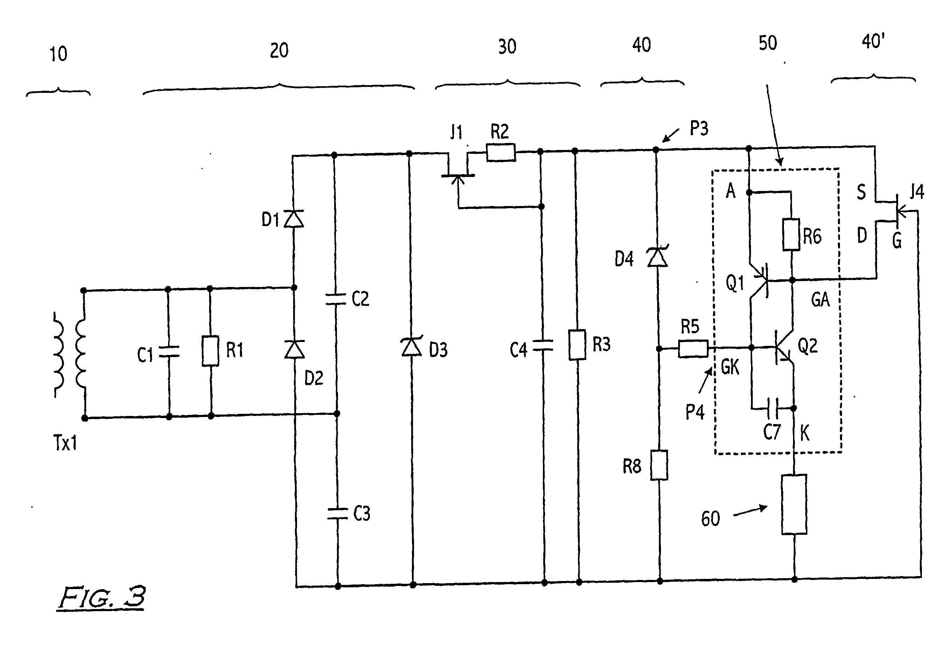

Fig. 3 zeigt die Elemente der Schaltungsanordnung eines erfindungsgemäßen FI-Schalters. Die Module 10, 20, 30, 40, 50 und 60 der Schaltungsanordnung entsprechen einem bekannten verzögerten FI-Schalter.
Mit Tx1 ist ein Summenstromwandler am Versorgungsnetz 12 bezeichnet. Der Summenstromwandler Tx1 bildet die Erfassungsvorrichtung 10 im Sinne der Erfindung. Über den Summenstromwandler Tx1 wird der Fehlerstrom erfaßt, es gelangen aber auch sonstige Störeinflüsse in die Schaltungsanordnung.

Der Sekundärwicklung des Summenstromwandlers ist die Aufbereitungsschaltung 20 nachgeordnet.
Die Aufbereitungsschaltung 20 umfaßt zunächst einen Widerstand R1, der zur Dämpfung von Ringbandkemen mit zu hoher Sekundärspannung dient.
Der Kondensator C1 dient zur Anpassung an die Sekundärinduktivität. Damit ist es möglich, eine Resonanzabstimmung der Aufbereitungsschaltung 20 auf 50 Hz bzw. auf die Netzfrequenz zu erhalten.
Weiters umfaßt die Aufbereitungsschaltung 20 eine Gleichrichtung mit Spannungsverdopplung. Die Gleichrichterbrückenschaltung mit Delonschaltung wird durch die Dioden D1 und D2 und die Kondensatoren C2 und C3 gebildet.
Der Gleichrichterbrückenschaltung ist eine Z-Diode D3 als Spannungs-Referenzelement nachgeordnet. Mit dieser Z-Diode D3 wird die Spannung der Aufbereitungsschaltung 20 begrenzt. Dies verhinderte ein zu schnelles Aufladen des nachgeschaltenen Speicherkondensators C4 bei höheren Fehlerströmen (ab 5xI_{Δn}).

Der Aufbereitungsschaltung 20 nachgeordnet ist eine Energie-Speicherschaltung 30. Diese umfaßt in der dargestellten Ausführung eine Konstantstromquelle, welche durch den Sperrschicht FET J1 und den Widerstand R2 gebildet ist. Der Widerstand R2 dient zur Einstellung des gewünschten Konstantstromes. Der FET ist im Abschnürbereich betrieben. Die Konstantstromquelle läßt einen Strom fließen, welcher nur im geringen Maß von der anliegenden Spannung abhängt. Dadurch wird der Speicherkondensator nur allmählich aufgeladen und man erhält eine Zeitverzögerung im Auslöseverhalten. Das Vorsehen einer Konstantstromquelle ist aber nicht zwingend.
Der Kern der Energie-Speicherschaltung 30 besteht aus dem Speicherkondensator C4, welcher beim Auftreten eines Fehlerstromes aufgeladen wird.
Der Speicherkondensator C4 entlädt gewollt über den Widerstand R3. Dadurch führen kurze Fehlerströme, deren Dauer unterhalb der Toleranzzeit des FI-Schalters ist, nicht zum kontinuierlichen Aufladen der Energie-Speicherschaltung 30.

Der erste Schwellenwertschalter 40, welcher in bekannter Weise die Spannung am Ausgang der Energie-Speicherschaltung 30 überwacht, ist durch eine in Sperrichtung geschaltenen Z-Diode D4 gebildet. Erreicht die an der Z-Diode D4 anliegenden Spannung deren Durchbruchspannung, wird durch die Z-Diode D4 der ersten Steuereingang GK des Schaltelementes 50 mit dem Ausgang der Energie-Speicherschaltung 30 verbunden.
Der mit der Z-Diode D4 in Serie geschaltene Widerstand R8 dient zum Einstellen der an der Z-Diode D4 anliegenden Spannung und somit zum Einstellen des Soll-Ladezustandes.
Ab dem durch die Durchbruchspannung der Z-Diode D4 und den Widerstand R8 einstellbaren Soll-Ladezustand der Energie-Speicherschaltung 30 werden die Punkte P3 und P4 über den Widerstand R5 verbunden. Somit wird durch den Schwellenwertschalter 40 ein Steuer-Impuls am ersten Steuereingang GK des Schaltelementes 50 erzeugt.

Das Schaltelement 50 bzw. der elektronische Schalter wird bei der dargestellten Ausführungsform durch eine Thyristor-Ersatzschaltung mit einem Anoden- A und einem Kathoden-Anschluß K, sowie einem anodenseitigen GA und einem kathodenseitigen Gate-Anschluß GK gebildet. Die Thyristor-Ersatzschaltung beinhaltet einen pnp-Transistor Q1 und einen npn-Transistor Q2, deren Kollektoren und Basen wechselweise miteinander verbunden sind, sowie einen Widerstand R6.
Der Anoden-Anschluß A bzw. der Emitter des pnp-Transistors Q1 liegt dabei am Potential des Ausgangs der Energie-Speicherschaltung 30. Der Kathoden-Anschluß K ist mit dem Auslöseelement 60 verbunden.
Die Thyristor-Ersatzschaltung dient als elektronischer Schalter. Im Normalbetrieb des Netzes, d.h. bei Ausbleiben eines Fehlerstromes, ist der Thyristor gesperrt, d.h. es kann kein Strom zwischen Anoden-Anschluß A und Kathoden-Anschluß K und weiter über das Auslöseelement 60 fließen.
Beim Erreichen des Soll-Ladezustandes wird der kathodenseitigen GK Gate-Anschluß über die durchzündende Z-Diode D4 mit einem Steuer-Impuls beaufschlagt, der zum Durchzünden der Thyristor-Ersatzschaltung führt.
Der kathodenseitigen GK Gate-Anschluß legt die Emitter-Basis-Spannung des npn-Transistors Q2 über den Widerstand R5 fest. Eine positive Spannung am kathodenseitigen GK Gate-Anschluß führt somit zum Ansteuern des npn-Transistors Q2. Dies bewirkt, daß sich die Transistoren Q1 und Q2 gegenseitig aufsteuern und durch den wechselseitigen Einfluß innerhalb eines sehr kurzen Zeitintervalls voll durchsteuem.
Die Thyristor-Ersatzschaltung bleibt auch noch nach dem Steuer-Impuls leitend.

Das Schaltelement 50 kann anstatt durch zwei bipolare Transistoren natürlich auch aus eine Thyristortetrode mit einem anodenseitigen und einem kathodenseitigen Gate bestehen, welche als eigenes Bauelement ausgeführt ist. Dieses kann über die Steueranschlüsse an- bzw. abgeschalten werden.
Der Kondensator C7 ist ein für das Schaltelement 50 nicht unbedingt notwendiges Bauteil. Er bildet jedoch eine zusätzliche Schutzkapazität gegen Fehlauslösen, weil vom Auslöseelement 60 bzw. vom PMA ausgehende Störungen gedämpft werden. Insbesondere bei einem beträchtlich unter dem Soll-Ladezustand liegendem Mindest-Ladezustand ist das Vorsehen des Kondensators C7 vorteilhaft. Der zweite Schwellenwertschalter 40' sperrt zwar das Schaltelement 50 bis zum Erreichen des Mindest-Ladezustandes der Energie-Speicherschaltung 30, weswegen keine Gefahr von Nichtauslösen des FI-Schalters durch Fehlzünden des Schaltelements 50 besteht; es kann aber immer noch zu Fehlauslösen des FI-Schalters bei Werten oberhalb des Mindest-Ladezustandes und unterhalb des Soll-Ladezustandes kommen. Diese Fehlauslösungen werden durch den Kondensator C7 weitgehend unterdrückt.

Der zweite Steueranschluß GA des Schaltelementes 50 ist mit einem zweiten Schwellenwertschalter 40' verbunden.
Der zweite Schwellenwertschalter 40' wird bei der in Fig. 3 skizzierten Schaltung durch einen Feldeffekttransistor J4 mit Gate- G , Drain- D und Source-Anschluß S gebildet.
Als Feldeffekttransistor J4 wird ein selbstleitender n-Kanal Sperrschicht Fet (n-JFet) verwendet. Dieser ist ohne Anliegen einer Steuerspannung U_{GS} leitend. Die Verbindung zwischen Drain- D und Source-Anschluß S wird erst bei Anlegen einer negativen Steuerspannung U_{GS}, welche größer ist als die herstellerabhängige Schwellenspannung (Threshold-Spannung: Uₜₕ) ist, hochohmig. Ein typischer Wert der Threshold-Spannung liegt bei 5 Volt.
In der vorliegenden Schaltung ist der Drain-Anschluß D des Feldeffekttransistors J4 auf die Basis des pnp-Transistors Q1 gelegt.
Der Gate-Anschluß G des Feldeffekttransistors J4 ist mit dem Nullpotential 0 und der Source-Anschluß S mit dem Ausgang der Energie-Speicherschaltung 30 verbunden. Die am Ausgang der Energie-Speicherschaltung 30 anliegende Spannung dient somit als Steuerspannung U_{GS}.
In dieser Anordnung ist der Feldeffekttransistor J4 bis zum Erreichen der Threshold-Spannung Uₜₕ am Ausgang der Energie-Speicherschaltung 30 leitend. Dadurch sind Source S und Drain D des Feldeffekttransistors J4 und somit Basis und Emitter des pnp-Transistors Q1 kurzgeschlossen. Der pnp-Transistors Q1 ist somit blockiert und dadurch auch die gesamte Thyristor-Ersatzschaltung. Ein Fehlzünden des Schaltelementes 50 ist somit zuverlässig verhindert.

Wenn der Ladungszustand der Energie-Speicherschaltung 30 und somit das Potential am Source-Anschluß ansteigt -was bei Auftreten eines abzuschaltenden Fehlerstromes der Fall ist-, erhält man eine Ansteuerung des Feldeffekttransistors J4 mit negativer Gate-Spannung gegenüber Source. Bei Erreichen der Threshold-Spannung wird der Feldeffekttransistor J4 hochohmig.
Dadurch sind die Basis und der Emitter des pnp-Transistors Q1 sind nicht mehr kurzgeschlossen und die Transistoren Q1, Q2 zum Durchschalten des Auslöse-Spannungsimpulses auf das Auslöseelement 60 freigegeben.

Mit den angegebenen Werten führen also in die Schaltungsanordnung eingespeiste Spannungsimpulse, die am Gate-Anschluß G des Feldeffekttransistors J4 unterhalb der Threshold-Spannung Uₜₕ bleiben, nicht zum Zünden des Thyristors bzw. des Schaltelementes 50. Durch Änderung der halbleiterphysikalischen Größen des Feldeffekttransistors J4 kann dieser Wert in bestimmen Grenzen variiert werden, so daß mit der Schaltungsanordnung die Störspannungsschwelle in Relation zum Nennfehlerstrom nahezu beliebig einstellbar ist.

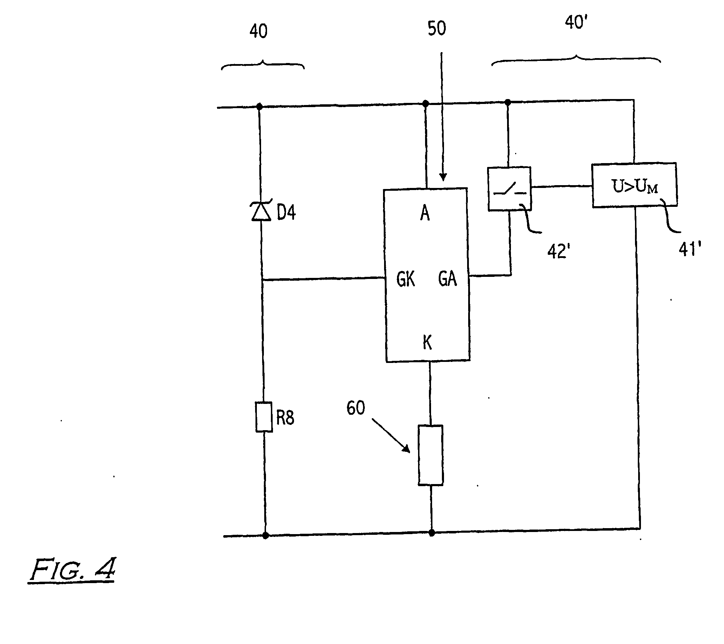

Statt des selbstleitenden n-Kanal Sperrschicht Fet (n-JFet) J4 sind auch andere Transistoren wie beispielsweise p-kanal Sperrschicht (p-JFet), und selbstleitende n oder p-Mosfet Transistoren möglich. Diese müssen jedoch mit anderer Polarität angesteuert werden. Der Vorteil bei diesen Bauteilen ist, daß Mosfets und Sperrschicht-Fets prinzipiell symmetrisch sind, d.h. Drain und Source vertauscht werden können.
Für die Herstellung möglichst kleiner Schaltungsanordnungen ist der Feldeffekttransistor zusammen mit den anderen Halbleiterbauelementen vorzugsweise auf einem Chip integriert.
Als Alternative zum Feldeffekttransistor J4 können natürlich auch - in Fig. 4 durch den Block 42' dargestellt - ein bipolarer Transistor, Thyristor, spannungsgesteuerter Widerstand oder ein Relais verwendet werden, die von einem Spannungsteiler, Differenzverstärker oder Komparator, symbolisiert durch den Block 41', angesteuert werden können.
Wesentlich hierbei ist, daß die an der Energie-Speicherschaltung 30 anliegende Spannung durch den zweiten Schwellenwertschalter 40' überwacht wird, und bei Erreichen des Mindest-Ladezustandes das Schaltelement 50 freigegeben wird.

## Patentansprüche

1. Schaltungsanordnung für einen Fehlerstromschutzschalter umfassend
- eine Erfassungsvorrichtung (10) für einen Fehlerstrom in einem Versorgungsnetz (12), welcher vorzugsweise eine Aufbereitungsschaltung (20) für den Fehlerstrom nachgeschalten ist,
- eine Energie-Speicherschaltung (30), welche in Abhängigkeit des erfaßten Fehlerstromes aufgeladen wird,
- einen Schwellenwertschalter (40), welcher den Ladungszustands der Energie-Speicherschaltung (30) überwacht, und
- ein Schaltelement (50) für die Generierung eines Auslöse-Spannungsimpulses für ein Auslöseelement (60) für einen Trennschalter mindestens eines vom Versorgungsnetz (12) gespeisten Verbrauchers,
wobei der Schwellenwertschalter (40) bei Erreichen eines vorgegebenen Ladungszustands (Soll-Ladezustand) der Energie-Speicherschaltung (30) das Schaltelement (50) zur Generierung eines Auslöse-Spannungsimpulses für das Auslöseelement (60) veranlaßt,
wobei
- ein zweiter Schwellenwertschalter (40') vorgesehen ist, **dadurch gekennzeichnet, daß** des zweite Schwellwertschaltes
- bis zum Erreichen eines weiteren vorgegebenen Ladungszustandes bzw. Mindest-Ladezustands der Energie-Speicherschaltung (30) das Schaltelement (50) sperrt.

2. Schaltungsanordnung nach Anspruch 1, **dadurch gekennzeichnet, daß** der weitere vorgegebenen Ladungszustand bzw. Mindest-Ladezustands der Energie-Speicherschaltung (30) über dem für das Funktionieren des Auslöseelements (60) notwendigen Ladungszustand liegt.

3. Schaltungsanordnung nach Anspruch 1 und 2, **dadurch gekennzeichnet, daß** der zweite Schwellenwertschalter (40') durch einem selbstleitenden N-Kanal Depletion Typ Junction Feldeffekttransistor (J4) gebildet ist.

4. Schaltungsanordnung nach Anspruch 1, 2 und 3, **dadurch gekennzeichnet, daß** der Feldeffekttransistor (J4) zusammen mit den anderen Halbleiterbauelementen auf einem Chip integriert ist.

## Claims

1. A circuit arrangement for a residual-current circuit breaker, comprising
- a detection apparatus (10) for a residual current in a supply network (12), which apparatus is preferably connected in outgoing circuit with a conditioning circuit (20) for the residual current;
- an energy storage circuit (30) which is charged depending on the detected residual current;
- a threshold switch (40) which monitors the charging state of the energy storage circuit (30), and
- a switch element (50) for generating a trip voltage impulse for a trip element (60) for a disconnector of at least one consumer supplied by the supply network;
with the threshold switch (40), upon reaching a predetermined charging state (setpoint charging state) of the energy storage circuit (30), makes the switch element (50) generate a trip voltage impulse for the trip element (60), with a second threshold switch (40') being provided, **characterized in that** the second threshold switch blocks the switch element (50) until reaching a further predetermined charging state or minimum charging state of the energy storage circuit (30).

2. A circuit arrangement according to claim 1, **characterized in that** the further predetermined charging state or minimum charging state of the energy storage circuit (30) lies above the charging state necessary for the functioning of the trip element (60).

3. A circuit arrangement according to claim 1 and 2, **characterized in that** the second threshold switch (40') is formed by a self-conductive N-channel depletion-type junction field-effect transistor (J4).

4. A circuit arrangement according to claim 1, 2 and 3, **characterized in that** the field-effect transistor (J4) is integrated on a chip together with the other semi-conductor components.

## Revendications

1. Agencement de circuit pour un disjoncteur à courant de fuite, comprenant :
- un dispositif de détection (10) d'un courant de fuite dans un réseau d'alimentation (12), qui est de préférence monté en aval d'un circuit de traitement (20) du courant de fuite,
- un circuit d'accumulation d'énergie (30) qui est chargé en fonction du courant de fuite détecté,
- un commutateur à seuil (40) qui surveille l'état de charge du circuit d'accumulation d'énergie (30), et
- un élément de commutation (50) destiné à générer une impulsion de tension de déclenchement pour un élément déclencheur (60) pour un sectionneur d'au moins un consommateur alimenté par le réseau d'alimentation (12),
dans lequel, lorsque le circuit d'accumulation d'énergie (30) atteint un état de charge prédéterminé (consigne de charge), le commutateur à seuil (40) commande à l'élément de commutation (50) de produire un impulsion de tension de déclenchement pour l'élément déclencheur (60),
dans lequel il est prévu un deuxième commutateur à seuil (40'),
**caractérisé en ce que** le deuxième commutateur à seuil bloque l'élément de commutation (50) jusqu'à ce qu'un autre état de charge prédéterminé ou état de charge minimal du circuit d'accumulation d'énergie (30) soit atteint.

2. Agencement de circuit selon la revendication 1, **caractérisé en ce que** l'autre état de charge prédéterminé ou état de charge minimal du circuit d'accumulation d'énergie (30) est supérieur à l'état de charge nécessaire au fonctionnement de l'élément déclencheur (60).

3. Agencement de circuit selon les revendications 1 et 2, **caractérisé en ce que** le deuxième commutateur à seuil (40') est formé par un transistor à effet de champ à jonction du type à canal N à appauvrissement transconducteur (J4).

4. Agencement de circuit selon les revendications 1, 2 et 3, **caractérisé en ce que** le transistor à effet de champ (J4) est intégré, avec les autres éléments semi-conducteurs, sur une puce.
